# EUROPEAN PATENT APPLICATION

(11) **EP 2 466 132 A2**
(43) Date of publication of application: **20.06.2012**
(21) Application number: 11380100.5
(22) Date of filing: 14.12.2011
(51) Int. Cl.: F03D 11/00

(54) **Wind generator with protection for flying animals**

(30) Priority: 15.12.2010 ES 201001230 U
(71) Applicant: Industrias Technoflex SA, 08191 Rubi Barcelona (ES)
(72) Inventor: Pujol Artigas, Jose Maria, 08191 Rubi (Barcelona) (ES)
(74) Representative: Torner Lasalle, Elisabet

(57) **Abstract**

The wind generator comprises a rotor (1) arranged for rotating about a shaft (4) and provided with a central body (2) and a plurality of blades (3) connected to said central body (2), said rotor (1) being operatively connected for moving an electric generator. At least one of the blades (3) of the rotor (1) has at least one light-emitting element (6) covered by a translucent or transparent luminous cover (5) extending along at least one portion of the length of the blade (3), said luminous cover (5) being made of a light transmitting material capable of transmitting the light emitted by said light-emitting element (6) along the entire length of the luminous cover (5) for the purpose of creating a luminous effect capable of frightening flying animals, such as birds and bats.

## Description

### Field of the Art

The present invention generally relates to a wind generator with protection for flying animals, such as birds and bats, and more particularly to a wind generator provided with a device for creating a luminous effect capable of frightening flying animals.

### Background of the Invention

In the effort to use clean and renewable energy sources, wind generators are increasingly used for transforming wind energy into electric energy. A wind generator generally comprises a rotor with a plurality of blades connected to a central body, wherein said rotor is arranged for rotating about a shaft due to wind effect and operatively connected for moving an electric generator.

Generally wind generators can be classified into two large types according to the orientation of the rotating shaft of the rotor with respect to the wind direction. Those of a first type, generally called horizontal axis wind generators, have the rotating shaft of the rotor arranged parallel to the wind direction and need an orientation device for orienting the rotor according to the wind direction, and those of a second type, generally called vertical axis wind generators, have the rotating shaft of the rotor arranged perpendicular to the wind direction and are independent of the wind direction.

Regardless of the typology of the wind generator, it has been verified that the rotor constitutes a danger for the flying animals, such as birds and bats upon rotating since the blades can collide with and cause harm to or even kill birds and bats which inadvertently fly through the trajectory of the blades.

Document JP-A-2007032279 confronts the problem of protecting birds or bats by providing a vertical axis wind generator provided with a protecting screen around the rotor. Nevertheless, this protecting screen, despite being configured for allowing the wind to pass therethrough, reduces the wind generator performance.

Document WO-A-2010076500 describes a wind generator provided with a device based on radar technology for detecting a bird or another flying object, calculating its trajectory and, in the event of foreseeing a collision with the blades of the rotor, stops the rotor to prevent the collision. As a drawback this device uses a very complicated and economically expensive technology.

In addition, scarecrow devices comprising a rotor provided with blades for rotating with the wind and equipped with small bells or other devices generating sound when the rotor rotates and/or reflective surfaces generating sparkle when the rotor rotates are known. Documents CN-A-200956775 and JP-A-11220996 are examples of such scarecrow devices. A drawback of this system if it were applied to a wind generator is that the continuous sound may disturb the people who are in the surrounding area of the wind generator.

Document JP-A-2010096104 discloses a display device comprising a vertical shaft rotor provided with inner blades and outer blades. The rotor is operatively connected for operating a dynamo for producing electric current. In the inner blades or in the outer blades there are arranged sequences of light-emitting elements which are supplied by an electric current generated by a power supply device which includes a ring fixed to a stationary support and arranged around the rotating shaft of the rotor and a C-shaped follower fixed to the rotor partially surrounding the ring such that when the rotor rotates, the follower slides along the ring without contacting the same.

The ring is connected to an alternating current power supply source and the follower is connected to a power supply circuit of the light-emitting elements. Upon rotating the rotor an induction current is produced in the follower which is used for supplying power to the light-emitting elements. An electric circuit controls the switching on and off of the light-emitting elements so that they form a luminous effect capable of representing information by a post-image effect upon rotating the rotor.

### Description of the Invention

The present invention contributes to solve the previous and other drawbacks by providing a wind generator with protection for flying animals, such as birds and bats, comprising a rotor arranged for rotating about a shaft, either parallel or perpendicular to the wind direction, and operatively connected for moving an electric generator. Said rotor is provided with a central body and a plurality of blades connected to said central body. One or more of said blades of the rotor have at least one light-emitting element covered by a translucent or transparent luminous cover extending along at least one portion of the length of the blade. Said luminous cover is made of a light transmitting material capable of transmitting the light emitted by said light-emitting element along the entire length of the luminous cover for the purpose of creating a luminous effect which, in combination with the rotation of the rotor, is capable of frightening flying animals, such as birds and bats.

Preferably, the luminous cover is located on a leading edge of the blade, or in other words, in a part of the blade which first contacts the air flow moved by the wind. The luminous cover advantageously extends along substantially the entire length of the blade, and in an embodiment there is a single light-emitting element located at or close to an end of the blade, although in other alternative embodiments there can be a light-emitting element at each end of the blade or several light-emitting elements distributed along the same, in any case the light-emitting elements always being covered by the luminous cover.

The shaft about which the rotor rotates is supported in a support structure, such as a orientable base if the wind generator has an axis parallel to the wind direction or has a non-vertical axis perpendicular to the wind direction, or a static base if the wind generator has a vertical axis perpendicular to the wind direction, and the single light-emitting element or the several light-emitting elements are supplied by electric current from a power supply source located in said structure by means of wiring and a conventional type rotating electrical connector. The one or more light-emitting elements are preferably light-emitting diodes (LED) due to their low power consumption and long service life, although they can be incandescent bulbs or any other element capable of generating light from electric energy, such as an electroluminescent device, a light-emitting organic diode (OLED), or a laser emitter.

In a preferred embodiment, the shaft about which the rotor rotates is a shaft perpendicular to the wind direction, and each blade comprises a constant section rectilinear profile to which the luminous cover is coupled. The mentioned profiles forming part of the blades are connected to the central body of the rotor by radial arms. Generally, although it is not essential, the profiles are supported in positions parallel to the rotating shaft perpendicular to the wind direction.

For example, the profiles of the blades can be hollow profiles obtained by extrusion of an aluminum alloy. Each profile preferably comprises at least one or more first coupling elements integrally formed in the extrusion process, which cooperate with one or more corresponding second coupling elements formed in the luminous cover for coupling the luminous cover to the profile, for example by snap fitting without needing to use tools. The coupling is easily reversible for removing the luminous cover in maintenance, reparation, or component replacement works.

The luminous cover can be made, for example, of colorless methacrylate, material having a high light transmitting capacity. In a preferred embodiment, the wind generator is of a vertical type shaft perpendicular to the wind direction, and in each blade there is a single light-emitting element located at a lower end of the profile. The light generated by this single light-emitting element will be transmitted by the luminous cover along the entire length of the blade to the upper end of the profile, creating a luminous effect in the form of a vertical luminous line in each blade, which, due to the rotation of the rotor, will in turn create a luminous effect in the form of a luminous cylinder of axis perpendicular to the wind direction capable of frightening flying animals, such as birds and bats.

Preferably, in the wind generator having a vertical axis perpendicular to the wind direction, an upper end of each profile and an upper end of each corresponding luminous cover are covered by a translucent or transparent luminous upper cover, preferably colored for example in red or orange, which is made of a light transmitting material for transmitting the light emitted by the light-emitting element and transmitted by the luminous cover. Alternatively, the blade can have at its upper end one or more light-emitting elements covered by said luminous upper cover. In this case, the light-emitting elements could be configured for emitting red or orange light and the upper cover could be colorless. Thus, in any case, the luminous effect in the form of a luminous cylinder is finished on the top by a luminous effect in the form of a red or orange luminous circle, as a warning.

In the case of the wind generator having an axis perpendicular to the wind direction, the blade, which is basically formed by the profile and the luminous cover coupled thereto, preferably has an aerodynamic cross-section similar to the that of an airplane wing, with a region close to the mentioned leading edge where the luminous cover is located thicker than a region close to an opposite trailing edge.

### Brief Description of the Drawings

The foregoing and other advantages and features will be better understood from the following detailed description of an embodiment with reference to the attached drawings, in which:
Figure 1 is a perspective view of a wind generator with protection for flying animals according to an embodiment of the present invention;
Figure 2 is a plan view of the wind generator of Figure 1;
Figure 3 is a partial sectional view of a blade of the rotor of the wind generator; and
Figure 4 is a partial perspective view of an upper end of a blade of the rotor of the wind generator.

### Detailed Description of a preferred Embodiment

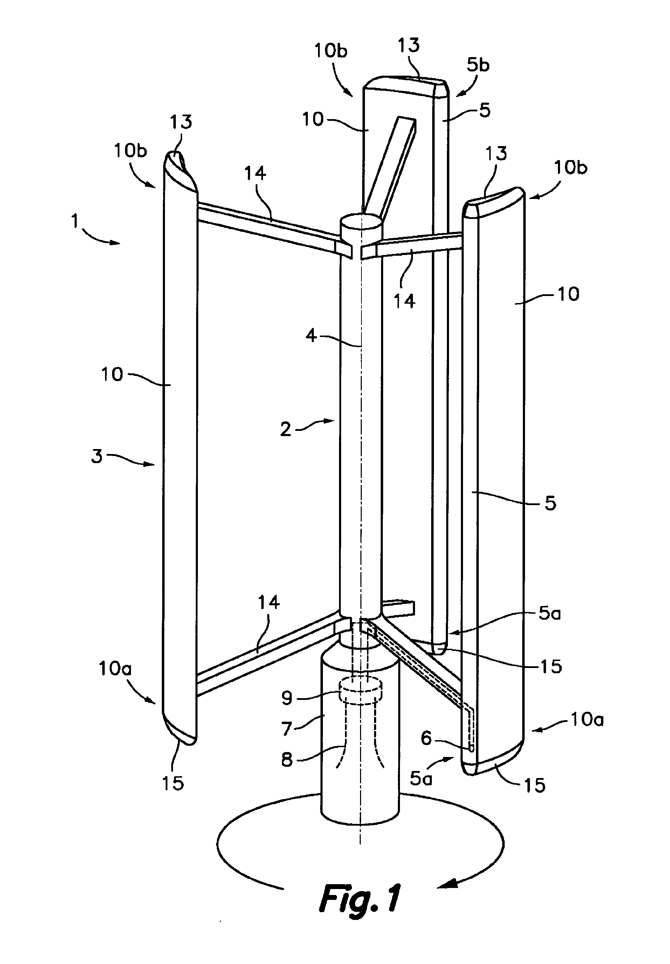

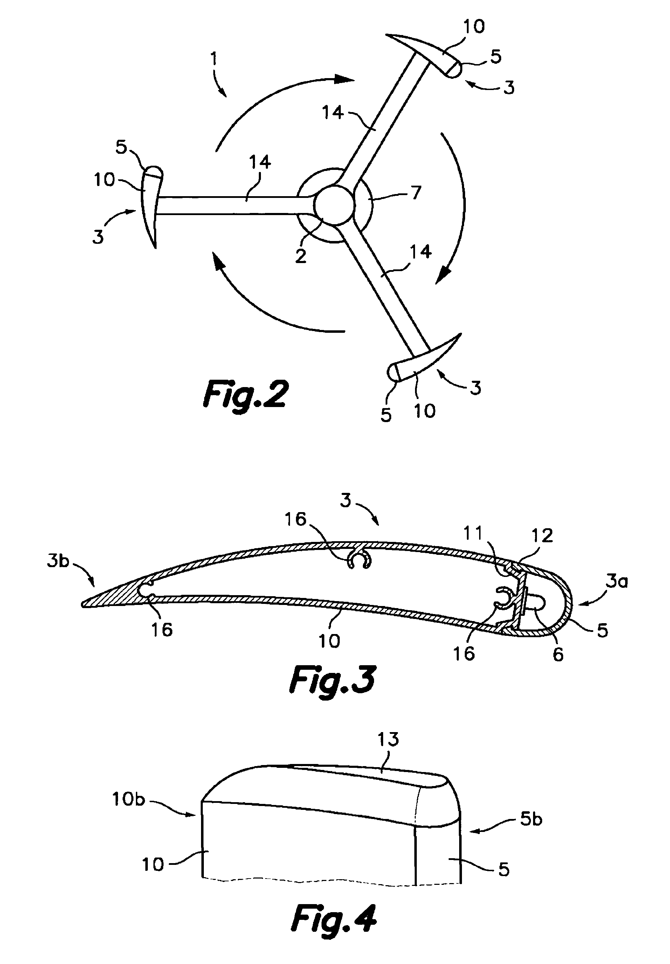

First, referring to Figures 1 and 2, there is shown a wind generator with protection for flying animals, such as birds and bats according to an embodiment of the present invention, wherein the wind generator is of the type comprising a rotor 1 arranged for rotating about a shaft 4 perpendicular to the wind direction supported in a support structure 7, such as a static base fixed to the ground. More specifically, the rotor 1 of the wind generator shown in Figures 1 and 2 is arranged for rotating about a vertical shaft 4 perpendicular to the wind direction. Nevertheless, it must be noted that the principles of the invention could also be alternatively applied to a wind generator having axis parallel to the wind direction or having non-vertical axis perpendicular to the wind direction by means of slight adaptations which can readily occur to a person skilled in the art of that sector.

The rotor 1 is provided with a central body 2 and three blades 3 connected to the mentioned central body 2 by arms 14, and the central body 2 of the rotor 1 is operatively connected for moving an electric generator (no shown), housed for example in said static base of said support structure 7 when the wind impinging on the blades 3 rotates the rotor 1.

As better shown in Figure 3, each of the blades 3 of the rotor 1 is basically formed by a rectilinear profile 10 having a constant section, and by a luminous cover 5 coupled to said profile 10. The luminous cover 5 is also rectilinear and has a constant section, and extends along substantially the entire length of the blade 3. In the rotor 1, the profiles 10 and the corresponding luminous covers 5 form rectilinear blades 3 substantially parallel to the vertical shaft 4.

The profile 10 is a hollow profile obtained by extrusion of aluminum alloy and the luminous cover 5 is obtained by molding or extrusion of a good light transmitting material such as methacrylate, preferably colorless. The profile 10 includes first coupling elements 11 which are coupled by snap fitting with corresponding second coupling elements 12 formed in the luminous cover 5 for removably coupling the luminous cover 5 to the profile 10.

The blade 3 which is basically formed by said profile 10 and the luminous cover 5 coupled thereto has an aerodynamic cross-section similar to that of an airplane wing, with a region close to a leading edge 3a thicker than a region close to an opposite trailing edge 3ab. The leading edge is that which first contacts the air flow moved by the wind. The luminous cover 5 is located on the leading edge 3a of the blade 3.

Each blade has one or more light-emitting elements 6, such as light-emitting diodes LED for example, installed in the profile 10 and covered by said luminous cover 5 (Figure 3). The light-emitting elements 6 are supplied by electric current from a power supply source (not shown) located in the static base forming the support structure 7 by means of wiring 8 and a rotating electrical connector 9 (Figure 1).

Since the luminous cover 5 is made of a good light transmitting material, such as methacrylate, the light emitted by said light-emitting elements 6 is transmitted along the entire length of the luminous cover 5, which creates a luminous effect in the form of a luminous line capable of frightening flying animals, such as birds and bats. The luminous effect increases with the rotation of the rotor 1 forming a luminous cylinder.

The profile 10 and the luminous cover 5 have respective open, flushed lower ends 10a, 5a and respective open, flushed upper ends 10b, 5b. The mentioned flushed lower ends 10a, 5a of the profile 10 and of the luminous cover 5 are covered by protector caps 15, while the flushed upper ends 10b, 5b of the profile 10 and of the luminous cover 5 are covered by translucent or transparent luminous upper covers 13 made of a light transmitting material preferably colored red or orange, which in addition to the protective function have the purpose of providing an additional luminous effect by being illuminated by one or more of the light-emitting elements 6.

The profile 10, which is advantageously made of extruded aluminum, comprises therein fixing elements 16 (Figure 3) configured for receiving fixing elements, such as self-tapping screws (not shown), for fixing the lower protector caps 15 and the luminous upper covers 13.

In the illustrated embodiment, a single light-emitting element 6 is located at a lower end 10a of the profile 10 of each blade 3, or close to the same (Figure 1), for minimizing the use of wiring 8. The light emitted by this single light-emitting element 6 is transmitted by the luminous cover 5 along the entire blade 3 to the corresponding luminous upper cover 13, which is also illuminated by the light transmitted by the luminous cover 5 creating in combination with the rotation of the rotor 1 an additional luminous effect in the form of an illuminated red or orange colored circle.

Modifications and variations will readily occur to a person skilled in the art from the shown and described embodiment without departing from the scope of the present invention as it is defined in the attached claims.

## Claims

1. A wind generator with protection for flying animals of the type comprising a rotor (1) arranged for rotating about a shaft and provided with a central body (2) and a plurality of blades (3) connected to said central body (2), said rotor (1) being operatively connected for moving an electric generator, and a protection device for protecting flying animals from harm caused by the rotor (1) as it rotates, **characterized in that** at least one of said blades (3) of the rotor (1) has at least one light-emitting element (6) covered by a translucent or transparent luminous cover (5) extending along at least a portion of the length of the blade (3), said luminous cover (5) being made of a light transmitting material capable of transmitting the light emitted by said light-emitting element (6) along the entire length of the luminous cover (5) for the purpose of creating a luminous effect capable of frightening flying animals.

2. The wind generator according to claim 1, **characterized in that** the luminous cover (5) is located on a leading edge (3a) of the blade (3).

3. The wind generator according to claim 1 or 2, **characterized in that** the luminous cover (5) extends along substantially the entire length of the blade (3).

4. The wind generator according to claim 3, **characterized in that** said shaft about which the rotor (1) rotates is supported in a support structure (7) and the at least one light-emitting element (6) is supplied by an electric current from a power supply source located in said support structure (7) by means of wiring (8) and a rotating electrical connector (9).

5. The wind generator according to claim 4, **characterized in that** the at least one light-emitting element (6) is selected from a group comprising a light-emitting diode (LED), an electroluminescent device, a light-emitting organic diode (OLED), an incandescent bulb, and a laser emitter.

6. The wind generator according to any one of the preceding claims, that said shaft about which the rotor (1) rotates is a shaft perpendicular to the wind direction (4).

7. The wind generator according to claim 6, **characterized in that** said shaft perpendicular to the wind direction (4) is a vertical shaft.

8. The wind generator according to claim 6 or 7, **characterized in that** the blade (3) comprises a rectilinear profile (10) of constant section to which the luminous cover (5) is coupled.

9. The wind generator according to claim 8, **characterized in that** said profile (10) is made of an extruded aluminum alloy and comprises at least a first coupling element (11) cooperating with a second coupling element (12) formed in the luminous cover (5) for coupling the luminous cover (5) to the profile (10).

10. The wind generator according to claim 8 or 9, **characterized in that** the luminous cover (5) is made of methacrylate.

11. The wind generator according to any one of claims 6 to 10, **characterized in that** the at least one light-emitting element (6) is located at or close to a lower end (10a) of the profile (10).

12. The wind generator according to claim 11, **characterized in that** an upper end (10b) of the profile (10) and an upper end (5b) of the luminous cover (5) are covered by a translucent or transparent luminous upper cover (13) made of a light transmitting material for transmitting the light emitted by the light-emitting element (6) and transmitted by the luminous cover (5).

13. The wind generator according to claim 12, **characterized in that** said luminous upper cover (13) is colored.

14. The wind generator according to any one of claims 6 to 10, **characterized in that** said profile (10) is substantially parallel to the shaft perpendicular to the wind direction (4).

15. The wind generator according to any one of the preceding claims, **characterized in that** each of said blades (3) of the rotor (1) has at least one of said light-emitting elements (6) covered by one of said luminous covers (5).
